(19) Europäisches Patentamt
European Patent Office
Office européen des brevets

(11) EP 0 783 245 B1

(12) **EUROPEAN PATENT SPECIFICATION**

(45) Date of publication and mention of the grant of the patent:
**18.11.1998 Bulletin 1998/47**

(21) Application number: **95931118.4**

(22) Date of filing: **18.09.1995**

(51) Int. Cl.$^6$: **A01N 25/30**, A01N 41/02, A01N 41/04

(86) International application number:
**PCT/CA95/00537**

(87) International publication number:
**WO 96/09761 (04.04.1996 Gazette 1996/15)**

# (54) DISINFECTANT COMPOSITIONS

DESINFEKTIONSMITTEL

COMPOSITIONS DESINFECTANTES

(84) Designated Contracting States:
**CH DE ES FR GB IT LI NL SE**

(30) Priority: **28.09.1994 GB 9419668**

(43) Date of publication of application:
**16.07.1997 Bulletin 1997/29**

(73) Proprietors:
- **UNILEVER N.V.**
  **3013 AL Rotterdam (NL)**
  Designated Contracting States:
  **CH DE ES FR GB IT LI NL SE**
- **UNILEVER PLC**
  **London EC4P 4BQ (GB)**
  Designated Contracting States:
  **GB**

(72) Inventors:
- **SINGH, Manjit**
  **Nottinghamshire NG16 2TZ (GB)**
- **TAYLOR, Geoffrey**
  **Berkshire RG40 1RP (GB)**
- **FARTHING, Stephen**
  **Watford WD2 4FD (GB)**

(74) Representative:
**Rosen Jacobson, Frans Lucas M. et al**
**Unilever N.V.,**
**Patent Division,**
**P.O. Box 137**
**3130 AC Vlaardingen (NL)**

(56) References cited:
**WO-A-92/09260**
**DE-A- 3 229 097**
**DE-A- 3 519 557**
**US-A- 3 650 964**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 783 245 B1

## Description

### FIELD OF THE INVENTION

The present invention relates to disinfectant compositions, in particular to disinfectant compositions which are compatible with foodstuffs and beverages.

### BACKGROUND OF THE INVENTION

There is a need in the processed food industry for disinfectants in liquid form which are compatible with foodstuffs and beverages, and which are stable when diluted with hard water and/or are stable when a concentrate of the disinfectant composition is stored. Ideally, the concentrate should remain stable for at least 3 months at room temperature, and more preferably for at least 2 months at -1°C.

As far as we are aware, there are no disinfectant compositions currently on the market which are food compatible and which at the same time are stable when diluted in hard water or in which a concentrated form of the disinfectant is stable for periods of 2 months or more, particularly at low temperatures, typically at temperatures down to -1°C.

Canadian Patent No. 1244759 discloses that the combination of alkyl sulphonates and/or alkyl sulphates with one or more specifically mentioned organic acids displays an unexpectedly broad spectrum of microbiocidal and virucidal activity in very low use concentrations at which the individual components of the combination do not exhibit any microbicidal activity.

US Patent No. 3650964 discloses sanitizer compositions intended to have low foaming properties. Anionic surface active agents are combined with an acid and may also contain a solubilising agent and/or a low foaming non-ionic surface active agent.

W092/09260 discloses sanitising compositions which comprise an anionic surfactant and an acidic component. Non-aqueous concentrates are disclosed which may be in the form of a solid dry composition or in the form of a liquid mixture in an anhydrous liquid carrier. Solutions of the compositions are found to have excellent antibacterial activity.

DE-A-3519557 discloses skin disinfectant compositions which incorporate a non-ionic surfactant, a diluting agent and, preferably, a benzylsubstituted quarternary ammonium compound. The compositions are reported to be only mildly biocidal.

It is also well known that certain anionic surfactants act as microbiocidal agents when acidified.

We have now found that incorporation of certain soluble non-ionic surfactants into compositions of acidified anionic surfactants produces disinfectant compositions which are stable when diluted with hard water.

### SUMMARY OF THE INVENTION

According to the present invention there is provided a disinfectant composition which is compatible with foodstuffs and beverages, said composition comprising:-

(a) a anionic surfactant chosen from an alkali metal salt of a $C_{10}$-$C_{18}$ alkyl sulphate and an alkali metal salt of di ($C_6$-$C_{10}$ alkyl) sulphosuccinate;
(b) an acid selected from citric acid, phosphoric acid, sulphuric acid, hydrochloric acid, acetic acid, gluconic acid, lactic acid, propionic acid, malic acid and tartaric acid; and
(c) a non-ionic surfactant which comprises a polyethoxylated sorbitan ester which is readily soluble in water.

The anionic surfactant used in the disinfectant compositions of the present invention is preferably sodium lauryl sulphate or sodium dioctyl sulphosuccinate.

### DETAILED DESCRIPTION OF THE PREFERRED EMBODIMENTS

The amount of anionic surfactant (a) which is usually present in the disinfectant compositions of the present invention is from 1 to 20 wt%, preferably from 5 to 9 wt%, more preferably about 7 wt%, based on the total weight of the disinfectant composition.

The non-ionic surfactants (c) which are incorporated in the disinfectant compositions of the present invention are polyethoxylated sorbitan esters which are soluble in water. These materials have the following general structural formula (I):-

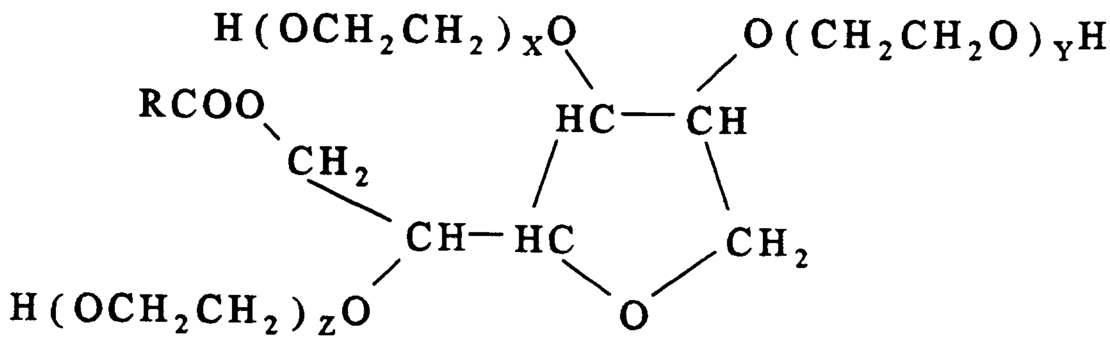

wherein R is the alkyl group of a fatty acid, typically a $C_{12}$-$C_{18}$ fatty acid such as lauric acid, palmitic acid, stearic acid and oleic acid, and ( x + y + z ) is the total number of moles of ethylene oxide.

Preferably the non-ionic surfactant (c) comprises a polyethoxylated sorbitan ester selected from ethoxylated sorbitan monolaurate, ethoxylated sorbitan monopalmitate, ethoxylated sorbitan monostearate, and ethoxylated sorbitan mono-oleate. Particularly preferred such polyethoxylated sorbitan esters are those containing 20 moles of ethylene oxide.

Especially preferred non-ionic surfactants of this type are Polysorbate 20, Polysorbate 40, Polysorbate 60 and Polysorbate 80. Three of these Polysorbate compositions are described in the Food Chemicals Codex, 3rd Edition, 1981, National Academy Press, Washington DC, as:-

Polysorbate 20 is a mixture of laurate partial esters of sorbitol and sorbitol anhydrides condensed with approximately 20 moles of ethylene oxide,($C_2H_4O$) for each mole of sorbitol and its mono- and di-ahydrides.

Polysorbate 60 is a mixture of stearate and palmitate partial esters of sorbitol and sorbitol anhydrides condensed with approximately 20 moles of ethylene oxide ($C_2H_4O$) for each mole of sorbitol and its mono- and di-anhydrides.

Polysorbate 80 is a mixture of oleate partial esters of sorbitol and sorbitol anhydrides condensed with approximately 20 moles of ethylene oxide ($C_2H_4O$) for each mole of sorbitol and its mono- and di-anhydride.

Polysorbate 40 is an ethoxylated sorbitan monopalmitate containing 20 ethylene oxide groups, and is a non-ionic surfactant which is included in the EEC list of permitted food additives (see proposal for a Council Directive on food additives other than colours and sweeteners (92/C206/03) Official Journal of the European Communities No. C206/12, 13.8.92).

These Polysorbate non-ionic surfactants are available commercially from a variety of suppliers, for example Polysorbates 20, 40, 60 and 80 are sold by ICI as Tween 20, Tween 40, Tween 60 and Tween 80, respectively, or by Croda as Crillet 1, Crillet 2, Crillet 3 and Crillet 4, respectively, or by Seppic as Montanox 20, Montanox 40, Montanox 60, Montanox 80, respectively.

The proportions of the anionic surfactant (a), acid (b) and non-ionic surfactant (c) in the formulation are chosen to provide the best compromise between the various desired properties of the formulation (i.e. disinfectant activity, concentrate stability, and hard water stability). The upper concentration limit for the anionic surfactant (a), usually sodium lauryl sulphate, is determined by the need to incorporate the other components (particularly the acid (b) and the non-ionic surfactant (c)) into the formulations in amounts which give a suitable balance between the desired properties.

As the concentration of the sodium alkyl sulphate (a) is increased, the amount of acid (b) must be increased in order to neutralise the alkalinity of the sodium alkyl sulphate. The disinfectant composition shows optimum disinfectant activity below pH3 (approximately).

Furthermore, as the amount of sodium alkyl sulphate is increased, the amount of non-ionic surfactant (c) must be increased in order to maintain the stability of the disinfectant composition when it is diluted in hard water. However, as the concentration of non-ionic surfactant is increased relative to the concentration of sodium alkyl sulphate (a), the biocidal properties of the disinfectant are reduced.

Likewise, lowering the concentration of sodium alkyl sulphate (a) in the formulation reduces the disinfectant activity of the formulation. The lower limit of 1% anionic surfactant (a) represents the concentration in a formulation that would be used neat, without further dilution.

The amount of the non-ionic surfactant (c) which is usually present in the disinfectant compositions of the present invention is from 1.5 to 22 wt%, advantageously from 6 to 12 wt%, preferably from 6 to 10 wt%, more preferably about 8 wt%, based on the total weight of the disinfectant composition.

The non-ionic surfactant (c) may include a proportion consisting of non-ethoxylated partial esters of sorbitan, provided that the resultant mixture remains readily soluble in water. These esters are typically sorbitan laurate, palmitate, stearate, oleate, tristearate, trioleate and sesquioleate, and are sold under the trade mark of "Crills" by Croda or as "Spans" by ICI.

Typically, the amount of the acid (b) which is present in the composition is from 2 to 28 wt%, preferably from 7 to 13 wt%, more preferably about 10 wt%, based on the total weight of the disinfectant composition.

The disinfectant compositions of the present invention are intended for use as disinfectants in food and beverage manufacturing, and are typically intended for use in cleaning and disinfecting machinery and work surfaces which have been used in the preparation of foodstuffs and beverages. They will also be suitable for use in restaurants, sandwich bars, and fast-food outlets. The compositions are intended to be sprayed on the surfaces to be cleaned and disinfected, or to be wiped on to such surfaces, with the optional step of rinsing the surfaces after the disinfectant composition has been applied thereto. Alternatively, equipment to be cleaned can be immersed in the disinfectant composition.

Accordingly, the various components in the disinfectant compositions of the invention must be selected so as to be compatible with foodstuffs and beverages in case traces of the disinfectant remain on the surfaces which have been treated with the disinfectant composition.

The disinfectant composition of the invention may also include as further components an antimicrobial agent (d), a solvent (e) and/or a food-compatible ammonium compound (f). The presence of one or more of these further components enables concentrated forms of the disinfectant to be stable for periods of at least a month when stored at room temperature and in some cases even when stored at temperatures down to -1°C.

The antimicrobial agent (d) is chosen from at least one of propionic acid, calcium, sodium or potassium propionate; $C_6$ - $C_{12}$ fatty acids, especially caprylic acid; benzoic acid, sodium benzoate; methyl parahydroxy benzoic acid, ethyl parahydroxy benzoic acid, propyl parahydroxy benzoic acid and their sodium salts; sorbic acid, potassium sorbate and calcium sorbate; dehydroacetic acid and sodium dehydroacetate; sodium diacetate; erythorbic acid and sodium erythorbate.

When the antimicrobial agent (d) is a $C_6$ - $C_{12}$ fatty acid, such as caprylic acid, propionic acid, calcium, sodium or potassium propionate, dehydroacetic acid, sodium dehydroacetate, sodium diacetate, erythorbic acid or sodium erythorbic acid, the amount of the antimicrobial agent which is usually present in the composition is from 0.3 to 6 wt%, preferably from 1.5 to 2.5 wt%. more preferably about 2 wt%, based on the total weight of the disinfectant composition.

When the antimicrobial agent (d) is benzoic acid, sodium benzoate; methyl parahydroxy benzoic acid, ethyl parahydroxy benzoic acid, propyl parahydroxy benzoic acid or their sodium salts; sorbic acid, potassium sorbate or calcium sorbate, the amount of antimicrobial agent which is usually present in the composition is from 0.2 to 3 wt%, preferably 0.5 to 1.5 wt%, more preferably about 1 wt%, based on the total weight of the disinfectant composition. Some of these antimicrobial agents may not be soluble at the upper end of the quoted concentration ranges; accordingly, the maximum amount of these antimicrobial agents which may be incorporated in the disinfectant compositions will depend on the solubility of the antimicrobial agent.

The solvent (e) is chosen from isopropanol, ethanol, glycerol, propylene glycol, and 1,3-butylene glycol and is preferably isopropanol. The amount of the solvent which is present in the composition is usually from 0.5 to 20 wt%, preferably from 3 to 10 wt%, more preferably about 7.5 wt%, based on the total weight of the disinfectant composition.

The food-compatible ammonium compound (f) comprises an ammonium compound approved for food or beverage use chosen from ammonium citrate, ammonium phosphate, ammonium sulphate and ammonium nitrate. Ammonium sulphate is preferred. The amount of ammonium compound usually present in the composition is from 0.5 to 3.0 wt%, preferably 1.5 to 2.5 wt %, more preferably about 2 wt %.

The disinfectant compositions of the present invention are usually prepared by dissolving the various components of the composition in soft water. Usually the anionic surfactant (a) is added to the water first which is stirred or agitated until the surfactant has dissolved, whereupon the remaining ingredients are added to the resultant solution. The solution is stirred or agitated until all the ingredients have dissolved.

As indicated above, the disinfectant compositions of the present invention are liquids which are stable when diluted with hard water, usually for at least 5 to 24 hours. Furthermore, in the presence of the antimicrobial agent (d), the solvent (e) or the ammonium compound (f), the concentrated forms of the disinfectant compositions of the present invention are normally stable for at least 2 months at room temperature. Ideally, the concentrated form of the disinfectant composition should be stable for 6 to 12 months at room temperature and for at least 2 months at temperatures down to -1°C.

The compositions are normally sold as concentrates, to be diluted in use. Typically dilution is such that 2% by weight of the concentrate is added to water to form the end product which is to be sprayed onto, or applied manually to, e.g. by wiping, the surfaces to be cleaned and disinfected. Subsequent rinsing of the treated surfaces is not essential, but may be desirable or required by appropriate legislation imposing regulations governing food hygiene.

The invention is illustrated by the following Examples.

EXAMPLE 1

A disinfectant liquid composition was prepared from the following components:-

| Component | Quantity (wt%) |
|---|---|
| Sodium lauryl sulphate | 7 |
| Citric Acid | 10 |
| Polysorbate 80 (Tween 80) | 8 |
| Caprylic Acid | 2 |
| Isopropanol | 3.4 |

The anionic surfactant (sodium lauryl sulphate) was dissolved with mechanical stirring in water. The remaining ingredients were added to the resultant solution, and stirring of the solution was continued until all the ingredients had dissolved.

The resultant composition was stable for more than 3 months at ambient temperature as a concentrate and stable for more than 72 hours at ambient temperature when diluted to 2% w/w in hard water (World Health Organisation, 300 ppm as $CaCO_3$).

A 2% w/w solution was biocidal against a range of bacteria. It was examined according to the test method proposed by CEN (European Committee for Standardization) for the evaluation of bactericidal activity of chemical antiseptics and disinfectants in food, industrial, domestic and institutional areas (see Document CEN/TC 216/WG 3 N34 E-C-4) but with the modification that the test temperature was reduced from 20°C to 10°C. The following results were obtained:

CONDITIONS : Soil, 0.3% w/v Bovine Serum Albumin
Hard water, 300ppm as $CaCO_3$
Contact temperature, 10°C
Contact time, 5 minutes

| ORGANISM | LOG REDUCTION OF VIABILITY |
|---|---|
| Pseudomonas aeruginosa | >6.3 |
| Escherichia coli | 5.4 |
| Yersinia enterocolitica | >6.3 |
| Enterococcus faecium | >5.9 |
| Salmonella typhimurium | >6.5 |
| Staphylococcus aureus | >6.4 |
| Listeria monocytogenes | >6.2 |
| Bacillus cereus | >5.2 |

EXAMPLE 2

Example 1 was repeated, but the disinfectant composition was formulated from the following components:-

| Component | Quantity (wt%) |
|---|---|
| Sodium lauryl sulphate | 7 |
| Citric Acid | 7 |
| Polysorbate 20 (Tween 20) | 8 |
| Caprylic Acid | 2 |
| Isopropanol | 3.4 |

This composition was also an effective food-compatible disinfectant.

The resultant composition was stable for more than 1 month at ambient temperature as a concentrate ad was stable for more than 72 hours at ambient when diluted to 2% w/w in hard water (World Health Organisation, 300 ppm as $CaCO_3$).

A 2% w/w solution was biocidal against bacteria and yeast according to the European Suspension Test protocol entitled "Test Methods for the antimicrobial activity of disinfectants in food hygiene" published by the Council of Europe (Strasbourg 1987). The nature of the soil was modified as shown below. The following results were obtained:-

CONDITIONS : Soil as shown below
Contact temperature, 20°C
Contact time, 5 minutes

| ORGANISM | SOIL | LOG REDUCTION OF VIABILITY |
|---|---|---|
| Pseudomonas aeruginosa | Distilled Water | >6 |
| | Hard Water (300 ppm as $CaCO_3$) | >6 |
| | 300 ppm HARD WATER + 0.03% BSA | >6 |
| Escherichia coli | Distilled Water | >6 |
| | Hard Water (300 ppm as $CaCO_3$) | >6 |
| | 300 ppm Hard Water + 0.03% BSA | >6 |
| Staphylococcus aureus | Distilled Water | >6 |
| | Hard Water (300 ppm as $CaCO_3$) | >6 |
| | 300 ppm Hard Water + 0.03% BSA | >6 |
| Saccharomyces cerevisiae | Distilled Water | >5 |
| | Hard Water (300 ppm as $CaCO_3$) | >5 |
| | 300 ppm Hard Water + 0.03% BSA | >5 |
| BSA = Bovine Serum Albumin | | |

EXAMPLE 3

| Component | Quantity (wt%) |
|---|---|
| Sodium lauryl sulphate | 7 |

(continued)

| Component | Quantity (wt%) |
|---|---|
| Sodium benzoate | 1.5 |
| Citric acid | 3 |
| Phosphoric acid (75%) | 3.5 |
| Polysorbate 80 (Tween 80) | 11 |
| Isopropanol | 3.4 |

The anionic surfactant (sodium lauryl sulphate) was dissolved with mechanical stirring in water. Sodium benzoate was dissolved similarly. The remaining ingredients were added to the resultant solution and stirring of the solution was continued until all the ingredients had dissolved.

The resultant composition was biocidal. The biocidal properties of the composition were tested as follows:-

CONDITIONS Modified European Suspension Test
Concentration, 2% w/w
Soil, modified as shown below
Contact Temperature, 20°C
Contact Time, 5 minutes

| ORGANISM | SOIL | LOG REDUCTION OF VIABILITY |
|---|---|---|
| Escherichia coli | Hard Water (300 ppm as $CaCO_3$) | >6 |

<u>EXAMPLE 4</u>

Example 1 was repeated, but the disinfectant composition was formulated from the following components:-

| Component | Quantity (wt%) |
|---|---|
| Sodium lauryl sulphate | 7 |
| Citric Acid | 10 |
| Polysorbate 80 (Tween 80) | 8 |
| Caprylic Acid | 2 |
| Isopropanol | 7.5 |

This composition was also an effective food-compatible disinfectant.

The resultant composition was stable for more than 6 months at ambient temperature and at -1°C as a concentrate and was stable for more than 48 hours at ambient when diluted to 2% w/w in hard water (World Health Organisation, 300 ppm as $CaCO_3$).

The resultant composition was biocidal. The biocidal properties of the composition were tested as follows:-

| | |
|---|---|
| CONDITIONS | Modified European Suspension Test<br>Concentration, 2% w/w in hard water (300 ppm as $CaCO_3$)<br>Soil, Bovine Serum Albumin (BSA) as shown below |
| Contact Temperature | 10°C (bacteria)<br>20°C (fungi) |
| Contact Time, | 5 minutes (bacteria)<br>15 minutes (fungi) |

Bacteria, 10°C, 5 minutes

| ORGANISM | SOIL | LOG REDUCTION OF VIABILITY |
|---|---|---|
| Pseudomonas aeruginosa | Hard Water (300ppm as $CaCO_3$) | |
| | + 0.03% w/v BSA | >6 |
| | + 0.3% w/v BSA | >6 |
| Escherichia coli | Hard Water (300ppm as $CaCO_3$) | |
| | + 0.03% w/v BSA | >6 |
| | + 0.3% w/v BSA | >6 |
| Staphylococcus aureus | Hard Water (300ppm as $CaCO_3$) | |
| | + 0.03% w/v BSA | >6 |
| | + 0.3% w/v BSA | >6 |
| Yersinia enterocolitica | Hard Water (300ppm as $CaCO_3$) | |
| | + 0.03% w/v BSA | >6 |
| | + 0.3% w/v BSA | >6 |
| Salmonella typhimurium | Hard Water (300 ppm as $CaCO_3$) | |
| | + 0.03% w/v BSA | >6 |
| | + 0.3% w/v BSA | >6 |
| Enterococcus faecium | Hard Water (300 ppm as $CaCO_3$) | |
| | + 0.03% w/v BSA | >6 |
| | + 0.3% w/v BSA | >6 |
| Listeria monocytogenes | Hard Water (300 ppm as $CaCO_3$) | |
| | + 0.03% w/v BSA | >6 |
| | + 0.3% w/v BSA | >6 |
| Bacillus cereus | Hard Water (300 ppm as $CaCO_3$) | |
| | + 0.03% w/v BSA | >6 |
| | + 0.3% w/v BSA | >6 |
| Fungi , 20°C, 15 minutes | | |

| ORGANISM | SOIL | LOG REDUCTION OF VIABILITY |
|---|---|---|
| Saccharomyces cervisiae | Hard Water (300 ppm as $CaCO_3$) | >6 |
| | Hard Water + 0.03% w/v BSA | >5 |
| Candida albicans | Hard Water (300 ppm as $CaCO_3$) | >6 |
| | Hard Water + 0.03% w/v BSA | >6 |

**EXAMPLE 5**

Example 1 was repeated, but the disinfectant composition was formulated from the following components:-

| Component | Quantity (wt%) |
|---|---|
| Sodium lauryl sulphate | 7 |
| Citric Acid | 10 |
| Polysorbate 80 (Tween 80) | 8 |
| Sodium benzoate | 1 |
| Isopropanol | 7.5 |

This component was also an effective food-compatible disinfectant.

The resultant composition was stable for more than 1 month at ambient temperature as a concentrate and was stable for more than 72 hours at ambient when diluted to 2% w/w in hard water (World Health Organisation, 300 ppm as $CaCO_3$).

The resultant composition was biocidal. The biocidal properties of the composition were tested as follows:-

CONDITIONS : Modified European Suspension Test
Concentration, 2% w/w
Soil, 300 ppm Hard water
Contact Temperature 20°C
Contact Time, 5 minutes

| ORGANISM | SOIL | LOG REDUCTION OF VIABILITY |
|---|---|---|
| Pseudomonas aeruginosa | Hard Water (300ppm as $CaCO_3$) | >6 |
| Staphylococcus aureus | Hard Water (300ppm as $CaCO_3$) | >6 |
| Escherichia coli | Hard Water (300ppm as $CaCO_3$) | >6 |

**EXAMPLE 6**

Example 1 was repeated, but the disinfectant composition was formulated from the following components:-

| Component | Quantity (wt %) |
|---|---|
| Sodium lauryl sulphate | 7 |
| Phosphoric Acid | 8 |
| Polysorbate 80 (Tween 80) | 12 |
| Ammonium sulphate | 2 |
| Isopropanol | 7.5 |

This composition was also an effective food-compatible disinfectant.

The resultant composition was stable for more than 2 months at ambient temperature as a concentrate and at -1°C and was stable for more than 48 hours at ambient when diluted to 2% w/w in hard water (World Health Organisation, 300 ppm as $CaCO_3$).

A 2% w/w solution was biocidal against bacteria and yeast according to the modification of the European Suspension Test protocol entitled "Test Methods for the antimicrobial activity of disinfectants in food hygiene" published by the Council of Europe (Strasbourg 1987). The nature of the soil was modified as shown below. The following results were obtained:-

CONDITIONS : Soil as shown below
Contact temperature 10°c
Contact Time, 5 minutes

| ORGANISMS | SOIL | LOG REDUCTION OF VIABILITY |
|---|---|---|
| Pseudomonas aeruginosa | Hard Water (300ppm as CaCO) | >6 |
| | Hard Water + 0.3%w/v BSA | >6 |
| Staphylococcus aureus | Hard Water (300ppm as CaCO) | >5.9 |
| | Hard Water + 0.3%w/v BSA | >5.9 |
| Escherichia coli | Hard Water (300ppm as CaCO) | >6.3 |
| | Hard Water + 0.3%w/v BSA | >6.3 |
| Saccharomyces cerevisiae | Hard Water (300ppm as CaCO) | >5.5 |
| | Hard Water + 0.3w/v BSA | 2.5 |

## Claims

1. A disinfectant composition which is compatible with foodstuffs and beverages, said composition comprising.-

   (a) an anionic surfactant chosen from an alkali metal salt of a $C_{10}$ - $C_{18}$ alkyl sulphate and an alkali metal salt of di ($C_6$ - $C_{10}$ alkyl) sulphosuccinate;
   (b) an acid selected from citric acid, phosphoric acid, sulphuric acid, hydrochloric acid, acetic acid, gluconic acid, lactic acid, propionic acid, malic acid and tartaric acid; and
   (c) a non-ionic surfactant which comprises a polyethoxylated sorbitan ester which is readily soluble in water.

2. A disinfectant composition according to Claim 1, wherein the anionic surfactant is sodium lauryl sulphate and/or sodium dioctyl sulphosuccinate.

3. A disinfectant composition according to Claim 1 or 2, wherein the amount of the anionic surfactant (a) which is present in the composition is from 1 to 20 wt%, preferably from 5 to 9 wt%, more preferably about 7 wt%, based on the total weight of the disinfectant composition.

4. A disinfectant composition according to Claim 1, 2, or 3, wherein the amount of the acid (b) which is present in the composition is from 2 to 28 wt%, preferably from 7 to 13 wt%, more preferably about 10 wt%, based on the total weight of the disinfectant composition.

5. A disinfectant composition according to any one of the preceding clams, wherein the non-ionic surfactant (c) comprises a polyethoxylated sorbitan ester selected from ethoxylated sorbitan monolaurate, ethoxylated sorbitan monopalmitate, ethoxylated sorbitan monostearate, and ethoxylated sorbitan mono-oleate.

6. A disinfectant composition according to Claim 5, wherein the polyethoxylated sorbitan ester contains 20 moles of ethylene oxide.

7. A disinfectant composition according to any one of the preceding claims, wherein the non-ionic surfactant (c) is chosen from at least one of Polysorbate 20, Polysorbate 40, Polysorbate 60 and Polysorbate 80.

8. A disinfectant composition according to any one of the preceding claims, wherein the amount of the non-ionic surfactant (c) which is present in the composition is from 1.5 to 22 wt%, preferably from 6 to 10 wt%, more preferably about 8 wt%, based on the total weight of the disinfectant composition.

9. A disinfectant composition according to any one of the preceding claims, which further comprises (d) an antimicrobial agent chosen from at least one of propionic acid, calcium, sodium or potassium propionate; $C_6$ - $C_{12}$ fatty acids, preferably caprylic acid; benzoic acid, sodium benzoate; methyl parahydroxy benzoic acid, ethyl parahydroxy benzoic acid, propyl parahydroxy benzoic acid and their sodium salts; sorbic acid, potassium sorbate and calcium sorbate; dehydroacetic acid and sodium dehydroacetate; sodium diacetate; erythorbic acid and sodium erythorbate.

10. A disinfectant composition according to Claim 9, wherein the antimicrobial agent (d) is a $C_6$ - $C_{12}$ fatty acid, propionic acid, calcium, sodium or potassium propionate, dehydroacetic acid, sodium dehydroacetate, sodium diacetate, erythorbic acid or sodium erythorbate, and the amount of the antimicrobial agent which is present in the composition is from 0.3 to 6 wt%, preferably from 1.5 to 2.5 wt%, more preferably about 2 wt%, based on the total weight of the disinfectant composition.

11. A disinfectant composition according to Claim 9, wherein the antimicrobial agent (d) is benzoic acid, sodium benzoate; methyl parahydroxy benzoic acid, ethyl parahydroxy benzoic acid, propyl parahydroxy benzoic acid or their sodium salts; sorbic acid, potassium sorbate or calcium sorbate, and the amount of antimicrobial agent which is present in the composition is from 0.2 to 3 wt%, preferably 0.5 to 1.5 wt%, more preferably about 1 wt%, based on the total weight of the disinfectant composition.

12. A disinfectant composition according to any one of the preceding claims, which further comprises (e) a solvent chosen from isopropanol, ethanol, glycerol, propylene glycol, and 1,3-butylene glycol.

13. A disinfectant composition according to Claim 12, wherein the solvent (e) is isopropanol.

14. A disinfectant composition according to Claim 12 or Claim 13, wherein the amount of the solvent (e) which is present in the composition is from 0.5 to 20 wt%, preferably from 3 to 10 wt%, more preferably about 7.5 wt%, based on the total weight of the disinfectant composition.

15. A disinfectant composition according to any one of the preceding claims, which further comprises (f) a food-compatible ammonium compound chosen from ammonium citrate, ammonium phosphate, ammonium sulphate and ammonium nitrate.

16. A disinfectant composition according to claim 15, wherein the amount of the food-compatible ammonium compound which is present in the composition is from 0.5 to 3.0 wt%, preferably 1.5 to 2.5 wt%, more preferably about 2 wt%, based on the total weight of the disinfectant composition.

**Patentansprüche**

1. Desinfektionszusammensetzung, die mit Lebensmitteln und Getränken kompatibel ist, wobei die Zusammensetzung

   (a) ein anionisches Tensid ausgewählt aus einem Alkalisalz eines $C_{10}$-$C_{18}$-Alkylsulfats und einem Alkalisalz von Di-($C_6$-$C_{10}$-alkyl)sulfosuccinat;
   (b) eine Säure ausgewählt aus Citronensäure, Phosphorsäure, Schwefelsäure, Salzsäure, Essigsäure, Gluconsäure, Milchsäure, Propionsäure, Äpfelsäure und Weinsäure und
   (c) ein nichtionisches Tensid, das einen polyethoxylierten Sorbitanester umfaßt, der leicht in Wasser löslich ist, umfaßt.

2. Desinfektionszusammensetzung nach Anspruch 1, worin das anionische Tensid Natriumlaurylsulfat und/oder Natriumdioctylsulfosuccinat ist.

3. Desinfektionszusammensetzung nach Anspruch 1 oder Anspruch 2, worin die Menge des anionischen Tensids (a), die in der Zusammensetzung vorhanden ist, 1 bis 20 Gew.-%, bevorzugt 5 bis 9 Gew.-%, bevorzugter etwa 7 Gew.-% ist, bezogen auf das Gesamtgewicht der Desinfektionszusammensetzung.

4. Desinfektionszusammensetzung nach Anspruch 1, 2 oder 3, worin die Menge der Säure (b), die in der Zusammensetzung vorhanden ist, 2 bis 28 Gew.-%, bevorzugt 7 bis 13 Gew.-%, bevorzugter etwa 10 Gew.-% ist, bezogen auf das Gesamtgewicht der Desinfektionszusammensetzung.

5. Desinfektionszusammensetzung nach einem der vorhergehenden Ansprüche, worin das nichtionische Tensid (c) einen polyethoxylierten Sorbitanester ausgewählt aus ethoxyliertem Sorbitanmonolaurat, ethoxyliertem Sorbitanmonopalmitat, ethoxyliertem Sorbitanmonostearat und ethoxyliertem Sorbitanmonooleat umfaßt.

6. Desinfektionszusammensetzung nach Anspruch 5, worin der polyethoxylierte Sorbitanester 20 Mol Ethylenoxid enthält.

7. Desinfektionszusammensetzung nach einem der vorhergehenden Ansprüche, worin das nichtionische Tensid (c) ausgewählt ist aus mindestens einer der folgenden Verbindungen Polysorbat 20, Polysorbat 40, Polysorbat 60 und Polysorbat 80.

8. Desinfektionszusammensetzung nach einem der vorhergehenden Ansprüche, worin die Menge des nichtionischen Tensids (c), die in der Zusammensetzung vorhanden ist, 1,5 bis 22 Gew.-%, bevorzugt 6 bis 10 Gew.-%, bevorzugter etwa 8 Gew.-% ist, bezogen auf das Gesamtgewicht der Desinfektionszusammensetzung.

9. Desinfektionszusammensetzung nach einem der vorhergehenden Ansprüche, die weiterhin (d) ein antimikrobielles Mittel enthält, ausgewählt aus mindestens einer der folgenden Verbindungen Propionsäure, Calcium-, Natrium- oder Kaliumpropionat, $C_6$-$C_{12}$-Fettsäuren, bevorzugt Caprylsäure, Benzoesäure, Natriumbenzoat, Methylparahydroxybenzoesäure, Ethylparahydroxybenzoesäure, Propylparahydroxybenzoesäure und deren Natriumsalze, Sorbinsäure, Kaliumsorbat und Calciumsorbat, Dehydroessigsäure und Natriumdehydroacetat, Natriumdiacetat, Erythrobinsäure und Natriumerythrobat.

10. Desinfektionszusarimensetzung nach Anspruch 9, worin das antimikrobielle Mittel (d) eine $C_6$-$C_{12}$-Fettsäure, Propionsäure, Calcium-, Natrium- oder Kaliumpropionat, Dehydroessigsäure, Natriumdehydroacetat, Natriumdiacetat, Erythrobinsäure oder Natriumerythrobat ist und die Menge des antimikrobiellen Mittels, die in der Zusammensetzung vorhanden ist, 0,3 bis 6 Gew.-%, bevorzugt 1,5 bis 2,5 Gew.-%, bevorzugter etwa 2 Gew.-% ist, bezogen auf das Gesamtgewicht der Desinfektionszusammensetzung.

11. Desinfektionszusammensetzung nach Anspruch 9, worin das antimikrobielle Mittel (d) Benzoesäure, Natriumbenzoat, Methylparahydroxybenzoesäure, Ethylparahydroxybenzoesäure, Propylparahydroxybenzoesäure oder deren Natriumsalz, Sorbinsäure, Kaliumsorbat oder Calciumsorbat ist und die Menge des antimikrobiellen Mittels, die in der Zusammensetzung vorhanden ist, 0,2 bis 3 Gew.-%, bevorzugt 0,5 bis 1,5 Gew.-%, bevorzugter etwa 1 Gew.-% ist, bezogen auf das Gesamtgewicht der Desinfektionszusammensetzung.

12. Desinfektionszusammensetzung nach einem der vorhergehenden Ansprüche, die weiterhin (e) ein Lösungsmittel ausgewählt aus Isopropanol, Ethanol, Glycerin, Propylenglycol und 1,3-Butylenglycol enthält.

13. Desinfektionszusammensetzung nach Anspruch 12, worin das Lösungsmittel (e) Isopropanol ist.

14. Desinfektionszusammensetzung nach Anspruch 12 oder Anspruch 13, worin die Menge des Lösungsmittels (e), die in der Zusammensetzung vorhanden ist, 0,5 bis 20 Gew.-%, bevorzugt 3 bis 10 Gew.-%, bevorzugter etwa 7,5 Gew.-% ist, bezogen auf das Gesamtgewicht der Desinfektionszusammensetzung.

15. Desinfektionszusammensetzung nach einem der vorhergehenden Ansprüche, die weiterhin (f) eine lebensmittelkompatible Ammoniumverbindung ausgewählt aus Ammoniumcitrat, Ammoniumphosphat, Ammoniumsulfat und Ammoniumnitrat enthält.

16. Desinfektionszusammensetzung nach Anspruch 15, worin die Menge der lebensmittelkompatiblen Ammoniumverbindung, die in der Zusammensetzung vorhanden ist, 0,5 bis 3,0 Gew.-%, bevorzugt 1,5 bis 2,5 Gew.-%, bevorzugter etwa 2 Gew.-% ist, bezogen auf das Gesamtgewicht der Desinfektionszusammensetzung.

**Revendications**

1. Une composition désinfectante qui est compatible avec des matières alimentaires et des boissons, ladite composition comprenant :

(a) un agent tensioactif anionique choisi parmi un sel de métal alcalin d'un sulfate d'alkyle en $C_{10}$-$C_{18}$ et un sel de métal alcalin de di-($C_6$-$C_{10}$ alkyl)sulphosuccinate ;
(b) un acide sélectionné parmi l'acide citrique, l'acide phosphorique, l'acide sulfurique, l'acide chlorhydrique, l'acide acétique, l'acide gluconique, l'acide lactique, l'acide propionique, l'acide malique et l'acide tartrique ; et
(c) un agent tensioactif non ionique, qui comporte un ester de sorbitan polyéthoxylé qui est facilement soluble dans l'eau.

2. Une composition désinfectante selon la revendication 1, dans laquelle l'agent tensioactif anionique est du laurylsulfate de sodium et/ou du dioctylsulphosuccinate de sodium.

3. Une composition désinfectante selon la revendication 1 ou 2, dans laquelle la quantité d'agent tensioactif anionique (a) qui est présent dans la composition est comprise entre 1 et 20 % en masse, de préférence entre 5 et 9 % en masse, de façon plus préférentielle est de l'ordre de 7 % en masse, sur la base de la masse totale de la composition désinfectante.

4. Une composition désinfectante selon la revendication 1, 2 ou 3, dans laquelle la quantité d'acide (b) qui est présent dans la composition est comprise entre 2 et 28 % en masse, de préférence entre 7 et 13 % en masse, de façon plus préférentielle est de l'ordre de 10 % en masse, sur la base de la masse totale de la composition désinfectante.

5. Une composition désinfectante selon l'une quelconque des revendications précédentes, dans laquelle l'agent tensioactif non ionique (c) comprend un ester de sorbitan polyéthoxylé sélectionné parmi le monolaurate de sorbitan éthoxylé, le monopalmitate de sorbitan éthoxylé, le monostéarate de sorbitan éthoxylé, et le monooléate de sorbitan éthoxylé.

6. Une composition désinfectante selon la revendication 5, dans laquelle l'ester de sorbitan polyéthoxylé contient 20 moles d'oxyde d'éthylène.

7. Une composition désinfectante selon l'une quelconque des revendications précédentes, dans laquelle l'agent tensioactif non ionique (c) est choisi parmi au moins un des Polysorbate 20, Polysorbate 40, Polysorbate 60 et Polysorbate 80.

8. Une composition désinfectante selon l'une quelconque des revendications précédentes, dans laquelle la quantité d'agent tensioactif non ionique (c) qui est présent dans la composition est comprise entre 1,5 et 22 % en masse, de préférence entre 6 et 10 % en masse, de façon plus préférentielle est de l'ordre de 8 % en masse, sur la base de la masse totale de la composition désinfectante.

9. Une composition désinfectante selon l'une quelconque des revendications précédentes, qui comprend en outre (d) un agent antimicrobien choisi parmi au moins un parmi l'acide propionique, le propionate de calcium, de sodium ou de potassium ; des acides gras en $C_6$-$C_{12}$, de préférence l'acide caprylique ; l'acide benzoïque, le benzoate de sodium ; l'acide de méthyle parahydroxybenzoïque, l'acide d'éthyle parahydroxybenzoïque, l'acide de propyle parahydroxybenzoïque et leurs sels de sodium ; l'acide sorbique, le sorbate de potassium et le sorbate de calcium ; l'acide déhydroacétique et le déhydroacétate de sodium ; le diacétate de sodium ; l'acide érythorbique et l'érythorbate de sodium.

10. Une composition désinfectante selon la revendication 9, dans laquelle l'agent antimicrobien (d) est un acide gras en $C_6$-$C_{12}$, de l'acide propionique, du propionate de calcium, de sodium ou de potassium, de l'acide déhydroacétique, du déhydroacétate de sodium, du diacétate de sodium, de l'acide érythorbique ou de l'érythorbate de sodium, et la quantité d'agent antimicrobien qui est en règle générale présent dans la composition est comprise entre 0,3 et 6 % en masse, de préférence entre 1,5 et 2,5 % en masse, de façon plus préférentielle est de l'ordre de 2 % en masse, sur la base de la masse totale de la composition désinfectante.

11. Une composition désinfectante selon la revendication 9, dans laquelle l'agent antimicrobien (d) est de l'acide benzoïque, du benzoate de sodium ; de l'acide de méthyle parahydroxybenzoïque, de l'acide d'éthyle parahydroxybenzoïque, de l'acide de propyle parahydroxybenzoïque ou leurs sels de sodium ; de l'acide sorbique, du sorbate de potassium ou du sorbate de calcium, et la quantité d'agent antimicrobien qui est présent dans la composition est comprise entre 0,2 et 3 % en masse, de préférence entre 0,5 et 1,5 % en masse, de façon plus préférentielle est

de l'ordre de 1 % en masse, sur la base de la masse totale de la composition désinfectante.

12. Une composition désinfectante selon l'une quelconque des revendications précédentes, qui comprend en outre (e) un solvant choisi parmi l'isopropanol, l'éthanol, le glycérol, le propylène glycol, et le 1,3-butylène glycol.

13. Une composition désinfectante selon la revendication 12, dans laquelle le solvant (e) est de l'isopropanol.

14. Une composition désinfectante selon la revendication 12 ou 13, dans laquelle la quantité de solvant (e) qui est présent dans la composition est comprise entre 0,5 et 20 % en masse, de préférence entre 3 et 10 % en masse, de façon plus préférentielle est de l'ordre de 7,5 % en masse, sur la base de la masse totale de la composition désinfectante.

15. Une composition désinfectante selon l'une quelconque des revendications précédentes, qui comprend en outre (f) un composé d'ammonium compatible sur le plan alimentaire choisi parmi le citrate d'ammonium, le phosphate d'ammonium, le sulfate d'ammonium et le nitrate d'ammonium.

16. Une composition désinfectante selon la revendication 15, dans laquelle la quantité de composé d'ammonium compatible sur le plan alimentaire présent dans la composition est comprise entre 0,5 et 3 % en masse, de préférence entre 1,5 et 2,5 % en masse, de façon plus préférentielle est de l'ordre de 2 % en masse, sur la base de la masse totale de la composition désinfectante.